# EUROPEAN PATENT APPLICATION

(11) **EP 2 397 572 A1**
(43) Date of publication of application: **21.12.2011**
(21) Application number: 11169719.9
(22) Date of filing: 14.06.2011
(51) Int. Cl.: C23C 4/04, C23C 4/06, C23C 4/10, C23C 30/00

(54) **Wear-resistant and low-friction coatings and articles coated therewith**

(30) Priority: 17.06.2010 US 817232
(71) Applicant: General Electric Company, Schenectady, NY 12345 (US)
(72) Inventor: Mathew, Paul, Niskayauna, NY 12309 (US); Anand, Krishnamurthy, Niskayauna, NY 12309 (US); Nayak, Mohandas, Niskayauna, NY 12309 (US); Nagesh, Mamatha, Niskayauna, NY 12309 (US); Thimmegowda, Shalini, Niskayauna, NY 12309 (US)
(74) Representative: Szary, Anne Catherine

(57) **Abstract**

A composition for a wear-resistant and low-friction coating is presented. The coating composition includes a hard ceramic phase, a metallic binder phase and a lubricant phase. The lubricant phase includes a multi-component oxide. An article having a wear-resistant and low-friction coating and a method of making such a coating are also described.

## Description

### BACKGROUND

This invention generally relates to coatings for articles. Particularly, the invention relates to protective coatings, which provide wear resistance and low-friction characteristics to articles exposed to high temperatures. Examples of such articles include turbomachines, such as turbine engines.

Metal components are used in a wide variety of industrial applications, under a variety of operating conditions. In many cases, the components are provided with coatings, which impart various characteristics, such as corrosion resistance, heat resistance, oxidation resistance, and wear resistance. As one example, the various components of turbine engines are often coated with thermal barrier coatings, to effectively increase the temperature at which they can operate. Other examples of articles that require some sort of protective coating include pistons used in internal combustion engines and other types of machine.

Wear-resistant coatings (often referred to as "wear coatings") are frequently used on turbine engine components, such as nozzle wear pads and dovetail interlocks. The coatings provide protection in areas where components may rub against each other, since the rubbing--especially high frequency rubbing--can damage the part. A specific type of wear is referred to as "fretting". Fretting can often result from very small movements or vibrations at the junction between mating components, e.g., in the compressor and/or fan section of gas turbine engines. For example, fretting can occur in regions where fan or compressor blades are joined to a rotor or rotating disc. This type of wear can necessitate premature repair or replacement of one or more of the affected components. Various alloys, such as those based on nickel or cobalt, are susceptible to fretting and other modes of wear. Many titanium alloys have especially poor fretting characteristics. Along with fretting resistance, other characteristics for the coating are also required. These include anti-scuffing properties (for example, in the case of piston rings and cylinder liners), as well as anti-friction properties.

A variety of coating systems have been used to impart wear resistance to substrates. Examples include those based on chromium; chromium carbide; cobalt-molybdenum-chromium-silicon, or copper-nickel-indium. The coatings can be applied by a variety of techniques, such as plating or thermal spraying.

While hard chromium coatings have been of great use in various applications, they exhibit some drawbacks. For example, the integrity of these coatings is challenged by the high temperatures and pressures to which they are often subjected, in both aerospace and automotive engine applications. Furthermore, chromium plating can be a very time-consuming process.

Moreover, the toxicity of some of the chromate compounds used as the chromium source is another drawback to the plating processes. In particular, hexavalent chromium is considered to be a carcinogen. When compositions containing (or releasing) this form of chromium are used, special handling procedures have to be very closely followed, in order to satisfy health and safety regulations. The special handling procedures can often result in increased costs and decreased productivity.

In many applications, chromium plating processes have been replaced by spraying techniques, as mentioned above. As an illustration, thermal spray techniques have been employed to deposit coatings based on tungsten carbide (WC), or chromium carbide (for example, Cr₃C₂). While the resulting coatings are suitable for many purposes, they have limitations as well, e.g., in their thermal properties.

Thermally sprayed cermet coatings have also become fairly popular for providing wear resistance in certain situations. Examples of these coatings include tungsten carbide-cobalt (WC--Co), tungsten carbide-cobalt-chromium (WC--Co--Cr), and chromium carbide/nickel chromium (for example, Cr₃C₂--NiCr). As another example, U.S. Pat. No. 6,887,585 (Herbst-Dederichs) describes wear-resistant coatings based on a metallic phase, such as nickel or iron alloys, along with a ceramic phase, such as alumina, chromic oxide (Cr₂O₃), or titanium carbide (TiC). The coatings may also include a solid lubricant material to reduce friction. Examples of the lubricants include materials such as graphite, hexagonal boron nitride, and polytetrafluoroethylene.

While many of the cermet coatings are suitable for certain end uses, they also exhibit deficiencies. For example, the hardness of the WC- and Cr₃C₂-based coatings may be insufficient for other end uses, as mentioned above. Moreover, WC--Co coatings are usually restricted to temperatures below about 500 degrees Celsius, in oxidizing environments. This limitation is often seen in a thermal spray process such as HVOF or APS, and is due in part to carbide degradation during deposition. Carbide degradation can occur when a WC material is oxidized, and forms brittle subcarbides. Coatings like those based on Cr₃C₂--NiCr may have satisfactory wear properties at higher temperatures, e.g., about 500-900°C. However, they may not have adequate low-friction properties and, moreover, it is difficult to control the microstructure of such coatings during thermal spraying.

Thus, there is a need to provide an improved protective coating for compressor components, particularly to those components that are exposed to wear and friction. It is desirable that the protective coating provides the necessary amount of wear-resistance (e.g., anti-fretting capabilities) desired for high temperature applications, and also providing good low-friction properties.

### BRIEF DESCRIPTION

One embodiment is a coating composition including a hard ceramic phase, a metallic binder phase and a lubricant phase. The lubricant phase includes a multi-component oxide.

Another embodiment is an article. The article includes a metallic substrate and a wear-resistant and low-friction coating disposed on the substrate. The coating composition includes a hard ceramic phase, a metallic binder phase and a lubricant phase, wherein the lubricant phase includes a multi-component oxide.

Yet another embodiment is a method of making a composition for a wear-resistant and low-friction coating. A hard ceramic phase and a metallic binder phase are milled together to make a mixture and then, a lubricant phase is dispersed in the mixture. The lubricant phase includes a multi-component oxide.

### DRAWINGS

These and other features, aspects, and advantages of the present invention will become better understood when the following detailed description is read with reference to the accompanying drawings, wherein:
FIG. 1 shows scanning electron micrographs of Sample 1 before and after friction test.
FIG. 2 shows scanning electron micrographs of Sample 2 before and after friction test.

### DETAILED DESCRIPTION

Embodiments of the present invention include in part a wear-resistant and low-friction coating composition for substrates, such as metal substrates. The coatings may be particularly useful for high temperature applications, and may provide other benefits, including desirable levels of hardness, corrosion resistance, heat resistance, and oxidation resistance. Moreover, the coatings may be applied by a variety of thermal spray processes. The coating is particularly well suited for protecting metallic components, such as industrial gas turbine compressor components that are often formed of iron-based alloys. These components are generally formed of martensitic/ ferritic stainless steels and subjected to degradation (fretting, etc.). While the invention will be described in reference to compressor components formed of a stainless steel, it should be understood that the teachings of this invention will apply to other components that are formed of a variety of metals, including, for example, iron-based alloys, superalloys (such as nickel-based and cobalt-based superalloys) and titanium-based alloys; such components may also benefit from improved wear-resistance and reduced friction.

Approximating language, as used herein throughout the specification and claims, may be applied to modify any quantitative representation that could permissibly vary without resulting in a change in the basic function to which it is related. Accordingly, a value modified by a term or terms, such as "about," is not limited to the precise value specified. In some instances, the approximating language may correspond to the precision of an instrument for measuring the value.

In the following specification and the claims that follow, the singular forms "a", "an" and "the" include plural referents unless the context clearly dictates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances, an event or capacity can be expected, while in other circumstances the event or capacity cannot occur - this distinction is captured by the terms "may" and "may be".

According to one embodiment of the invention, a coating composition includes a hard ceramic phase, a metallic binder phase, and a lubricant phase. The metallic binder phase functions as a binder for the hard ceramic phase and the lubricant phase in the coating composition. Choice of the constituents for a particular metallic binder depends on a variety of factors. One factor relates to the type of hard ceramic particles employed, and the ability of the metallic binder to adequately "wet" the hard ceramic particles. Another factor involves performance parameters for particular end uses for the coating, for example, in terms of characteristics such as corrosion resistance, heat resistance, oxidation resistance, and wear resistance. Another factor relates to the potential interaction of metallic binder with the other constituents, for example, the potential formation of undesirable compounds or phases at elevated temperatures.

Usually, the metallic binder phase (also referred to as metallic phase) is based on at least one of nickel, cobalt, iron, copper, and silver. In some embodiments, nickel is a constituent for the metallic phase. As further described below, combinations of nickel and chromium are also used in some embodiments.

The metallic phase very often includes a variety of other elements, depending on many of the factors discussed previously. Non-limiting examples are refractory elements such as tantalum, niobium, zirconium, and, molybdenum; as well as titanium, chromium, silicon, boron, and vanadium. Many combinations of these elements may also be employed, and the selection of any element or combination thereof will depend on many of the criteria noted above. As an example, niobium can be included to provide ductility and strength, while chromium, zirconium, and silicon may be added to enhance oxidation resistance. In some instances, boron and silicon are also added for melting point suppression, while chromium (mentioned above) and molybdenum are often added for corrosion resistance.

A non-limiting illustration of the amount of components in a coating composition can be provided, for some embodiments. For certain compositions in which the coating comprises at least about 50% by weight nickel, typical ranges for other constituents (if present) may be as follows (based on total coating composition, in weight):
Ta: about 0.5% by weight to about 1.5% by weight;
Ti: about 0.5% by weight to about 2% by weight;
Nb: about 0.5% by weight to about 2% by weight;
Cr: about 2% by weight to about 50% by weight;
Zr: about 0.5% by weight to about 1% by weight;
Si: about 0.5% by weight to about 4.5% by weight;
B: about 0.5% by weight to about 3.5% by weight; and
Mo: about 0.5% by weight to about 18% by weight.

In some embodiments, the metallic phase itself comprises nickel and chromium. For example, the matrix could include about 70% to about 90% nickel and about 5% to about 25% chromium, based on the total weight of the metallic phase, with the balance comprising one or more of the elements listed above. In certain embodiments, the metallic phase composition comprises nickel, chromium and molybdenum. In that instance, the metallic phase may include about 50% to about 80% nickel; about 5% to about 20% chromium, and about 10% to about 30% molybdenum, with the balance comprising the other elements described previously.

Various other combinations of metals for the metallic phase are also used in some embodiments. Non-limiting examples include cobalt and chromium; iron and chromium; iron and manganese; and iron and cobalt. Those skilled in the art will be able to select the most appropriate metallic phase composition for a particular situation, based in part on the teachings herein. Usually, the metallic phase is present at a level in the range of about 1% by volume to about 50% by volume, based on the total volume of the coating composition. In some specific embodiments, the metallic phase is present at a level in the range of about 5% by volume to about 20% by volume. The metallic phase often have particles of particle size in the range from about 0.5 micron to about 5 microns.

As mentioned above, the coating composition also includes at least one hard ceramic phase (i.e., a "primary ceramic phase"), which can provide the required amount of wear resistance and load-bearing characteristics for a given application. As used herein, the term "ceramic" may include a variety of hard-phase materials, for example, carbides, borides, or oxides of a metal selected from the group consisting of chromium, tantalum, molybdenum, vanadium, zirconium, and niobium. The ceramic phase can be formed from one or more constituents including those added initially for preparing coating composition as well as those formed *in-situ* when the coating performs at high temperatures. For example, carbides or borides in the coating composition may decompose into oxides while operating coated components at high temperatures. It will be understood the term "hard" as used herein refers to the hardness of the phase relative to the other constituents of the coating; that is, the ceramic constituent with the highest level of hardness is considered the "hard" ceramic phase.

Carbide-containing ceramic materials are used in some instances. In examplary embodiments, the hard ceramic phase (also referred to herein as simply "ceramic phase") comprises chromium carbide. The chromium carbide is typically one or more materials selected from the group consisting of Cr₃C₂, Cr₇C₃, and Cr₂₃C₆. Other examples of the ceramic phase include various borides. As used herein, "boride" is meant to include, without limitation, diborides and other boride species, unless otherwise specified. Non-limiting examples of boride include titanium diboride, zirconium diboride tantalum boride, and tungsten boride. General examples of the compounds include the transition metal diborides.

The selection of particular ceramic phase constituents depends in part on the factors described previously. For example, coating compositions that will protect turbine parts subjected to a high degree of fretting often include ceramic phase constituents because they provide a relatively high degree of abrasion resistance and wear resistance.

In specific embodiments, the coating composition further comprises a secondary ceramic phase. The secondary phase can function to increase the overall toughness of the composition. The phase usually comprises at least one material selected from the group consisting of silicon carbide, various metal carbides (e.g., boron carbide, titanium carbide, and tungsten carbide); various metal oxides (e.g., titanium dioxide and alumina); titanium nitride, and diamond. Further non-limiting examples of suitable materials include alumina, yttrium oxide, yttria-stabilized zirconia, hafnium oxide, silicon oxide (silicon dioxide), and mullite. Combinations of any of these materials are also possible. In some cases, the secondary phase includes alumina, titanium nitride, diamond dust, or various combinations thereof. The secondary ceramic phase, if included, is usually present at less than about 30 volume % of the entire ceramic phase.

The particles of the primary ceramic phase usually have particle size of at least about 0.2 micron, and up to about 5 microns. In some specific embodiments, the particle size is in the range of about 0.2 micron to about 3 microns, and more specifically, in the range of about 1 micron to about 1.5 microns. Moreover, in some preferred embodiments, the secondary ceramic phase has a finer particle size than that of the primary phase. The particle size for the secondary ceramic phase, in some embodiments, is less than about 1 micron, and in particular embodiments, less than about 100 nanometers. In certain embodiments, the secondary phase has particle size in the range from about 10 nanometers to about 100 nanometers.

The amount of the hard ceramic phase varies considerably, depending on many of the factors described herein, including, for example, the particular type of ceramics being used, as well as the desired hardness for the coating composition. In general, the ceramic phase is present at a level in the range from about 20% by volume to about 90% by volume, based on the volume of the entire coating composition. In some specific embodiments, the amount of the ceramic phase is in the range from about 40% by volume to about 80% by volume. In some embodiments, the amount is in the range from about 50% by volume to about 70% by volume.

As noted previously, the coating composition includes a lubricant phase (also referred to as lubricant). The presence of the lubricant provides lubricity to the coating, to decrease the friction between two surfaces rubbing against each other. The particular lubricant selected will depend on various factors. Wear-resistance, friction-coefficient and operating temperature are in part key considerations. Compatibility of the lubricant with the materials which are used for the metallic phase and ceramic phase is also an important consideration.

As used herein, the term "lubricant phase" or "lubricity of a phase" refers to describe the ability of a compound (lubricant) to reduce friction between two or more sliding parts in a machine or mechanism. Another parameter to determine lubricity of a compound may be its shear rheology.

In some embodiments, the lubricant phase is formed of a multi-component oxide. As used herein, the term "multi-component oxide" refers to a combination of at least a pair of oxides. For example, the multi-component oxide may be a binary oxide (two component oxides), a ternary oxide (three component oxides) or a quaternary oxide (four component oxides). The constituent oxides in the combination (mixture) may or may not chemically react. Chemical reaction among constituent oxides may depend on various parameters such as types of constituent oxides, method of preparation of a multi-component oxide, environmental conditions etc. In one embodiment, the constituent oxides do not react and remain as individual oxides in the mixture. However, chemical reaction may occur at the operating temperature. In another embodiment, the constituent oxides are reacted with one-another (either before or after introducing them into the coating composition) and form a complex compound, and it is this complex compound that serves as the lubricant phase.

In general, the higher the ionic potential, the lower the friction coefficient of an oxide. "Ionic potential" is a ratio of electric charge to the radius of an ion, and thus a measure of density of charge of the ion. Ionic potential gives a sense of how strongly or weakly the ion is electrostatically attracted to ions of opposite charge or repelled by ions of like charge. The oxides with higher ionic potential appear to shear more easily and thus exhibit lower friction at high temperatures. Moreover, as the difference in ionic potentials of the oxide constituents of a multi-component oxide increases, the ability of oxides to form a low melting point or readily shearable compound improves and hence the multi-component oxide exhibits low hardness and shear strength. In other words, the greater the difference in ionic potentials of the component oxide constituents of the lubricant phase, lower is the friction at elevated temperatures. For example, a binary oxide NiO-B₂O₃ having large ionic potentials difference (-9 Å⁻¹) exhibits low friction coefficient (-0.2) at 600 degrees Celsius. Furthermore, the ability of an oxide to dissolve in or react with other oxide or to form complex compounds increase with the difference in their ionic potentials. The mechanism of such lubricious oxides is described in an article entitled "A crystal-chemical approach to lubrication by solid oxides" by Ali Erdemir, Tribology Letters 8 (2000), 97-102.

In some embodiments, at least one oxide of the multi-component oxide lubricant phase has an ionic potential greater than about 4Å⁻¹, and in some certain embodiments, greater than about 5Å⁻¹. In certain embodiments, the lubricant phase contains a multi-component oxide having at least one metal oxide constituent selected from the group consisting of nickel oxide, alumina, titanium oxide, tantalum oxide, zinc oxide, molybdenum oxide and magnesium oxide.

In certain instances, a binary oxide is used as lubricant in the coating composition. The binary oxide contains a pair of component oxides. As discussed above, choice of the oxide pair depends on their ionic potentials. As the difference in ionic potential increases, the lubricity of the binary oxide (or oxide pair) increases, especially at elevated temperatures. Examples of suitable oxide pairs include, but are not limited to, NiO-B₂O₃, NiO-TiO₂, NiO-Ta₂O₅ and MgO-SiO₂ In certain embodiments, the binary oxide includes NiO-B₂O₃. In other certain embodiments, the binary oxide includes NiO-TiO₂.

Lubricious properties may further depend on the amount of constituent oxides relative to each other present in a binary oxide. In some embodiments, the constituent oxides of the multi-component oxide are present in a ratio (by weight) varying from about 1:1 to about 1:10. In certain embodiments, the constituent oxides are present in a ratio (by weight) varying from about 1:1 to about 1:5, and in some specific instances, from about 1:1 to about 4:1.

The desired particle size of the lubricant depends on the particular material being used. A particle size, which is too small, may decrease the beneficial effect of the lubricant in reducing friction. Conversely, if the particle size of the lubricant is too large, tribological and mechanical properties may suffer. For example, the mechanical strength as well as the wear resistance of the coating may decrease. Generally, the lubricant particles have a size that permits them to be situated within the spacing that separates the hard particles in the metallic binder. In some embodiments, the lubricant phase contains submicron size particles of the multi-component oxide. As used herein, the term "submicron" refers to particle dimension in a range from about 100 nanometers to about 2 microns. In certain embodiments, the oxide particles have particle dimension in a range from about 50 nanometers to about 1 micron.

The amount of lubricant in the coating composition may depend on many of the factors mentioned previously. As an example, an excessive amount of lubricant (or lubricant particles which are too large) may decrease the mechanical strength of the coating. In some instances, the lubricant phase is present at a level in the range of about 1% by volume to about 30% by volume of the coating composition. In certain instances, the range for lubricant is about 5% by volume to about 20% by volume.

The coating composition may be designed to provide corrosion resistance along with wear resistance and lubrication. This can be achieved by tailoring the amount of the coating constituents to a specific environment known to exist in a given application. In some instances, the amount of the metallic binder phase and the *in-situ* generated phases may be tailored to be corrosion resistant to a given environment.

In some embodiments, the lubricant component is incorporated into the coating composition in solid powdered form or slurry form. A number of methods may be used to form oxide powders or a slurry having particles of above mentioned particle size. Examples of some methods are the precipitate method and the solid-state method. In some instances, the multi-component oxide powder is synthesized by a chemical route.

The coating composition advantageously provides high wear resistance and good lubrication. Finely dispersed oxide particles provide a low friction and low shear strength phase and in-situ oxide formation provides high wear resistance to sliding surfaces under heavy loads. The *in-situ* generated oxide, for example chromium oxide in NiCr-Cr₃C₂-NiO-B₂O₃ composition, contributes to good wear resistance for the coating. In certain instances, the atomic ratio of chromium to oxygen in the coating is about 1 (desirable for good wear resistance). Furthermore, a smooth smeared-like layer is formed during wear, as the surfaces slide across each other under heavy loads. The layer is capable of providing low friction and low wear rate. The multi-component oxide present in the coating enables good lubrication even when the top surface of the coating is removed by wear.

Some embodiments provide a method of making the coating compositions described above. Mechanical milling procedures can be used to prepare a mixture of a hard ceramic phase and a metallic binder phase. In those instances, a high-energy mill may be used to carry out the milling process. The next step involves dispersion of the lubricant phase in the above mixture by adding and further milling the mixture to form the composition. Some other examples of suitable techniques include spray-drying, self-propagating, and high-temperature synthesis (SHS). Another suitable technique involves sintering of the raw material powders, followed by crushing of the resulting pellets. The preparation techniques may involve multiple steps, and combinations of various techniques.

An article, according to one embodiment of the invention, includes a metallic substrate that may be a component of an industrial gas turbine. Specific, non-limiting examples of the turbine components include buckets, nozzles, blades, rotors, vanes, stators, shrouds, combustors, and blisks. Non-turbine applications are also possible. Examples further include components of other articles used under conditions of high temperature and/or high-wear environments. These components (e.g., the substrate) are typically formed of a metal or a metal alloy, such as stainless steel. Other suitable materials for the substrate include nickel, cobalt, titanium, and their respective alloys. The components may be coated or partially coated with the coating composition for protecting surfaces from the ambient environment.

The thickness of the coating may depend on many of the other factors discussed previously, for example, composition of the coating and article, the end use of the article, and the like. In some embodiments, the coating will have a thickness of about 50 microns to about 500 microns. In some specific embodiments, the thickness will be in the range of about 100 microns to about 200 microns.

As mentioned previously, the coatings described herein are particularly useful for deposition on a metal alloy, which includes a contact surface that is shaped or positioned to cooperate with the contact surface of an abutting member. In such an instance, the coating (which could also be applied to the abutting member) substantially prevents fretting wear between the contact surfaces. It is believed that the coatings are suitable for supporting high-contact stresses between such surfaces, e.g., stresses greater about 30,000 psi. Moreover, the coatings may be useful when employed under oxidizing conditions at elevated temperatures, for example, above about 500 degree Celsius, and in some instances, even above about 600 degrees Celsius.

The coating composition can be applied to the substrate by a variety of different techniques. Selection of a particular technique will depend on various factors, such as the type and composition of the coating powder, feedstock particle size, and the end use contemplated for the part. In one embodiment, a spray technique is used to deposit the coating. Non-limiting examples include plasma deposition (e.g., ion plasma deposition, vacuum plasma spraying (VPS), low pressure plasma spray (LPPS), and plasma-enhanced chemical-vapor deposition (PECVD)); HVOF techniques; high-velocity air-fuel (HVAF) techniques; PVD, electron beam physical vapor deposition (EBPVD), CVD, APS, cold spraying, and laser ablation.

Thermal spray techniques are of special interest for some embodiments. Examples listed above include VPS, LPPS, HVOF, HVAF, APS, and cold-spraying. In many instances, HVOF or HVAF is the preferred technique. Those skilled in the art are familiar with the operating details and considerations for each of these techniques. Moreover, various combinations of any of these deposition techniques could be employed. It should also be noted that in some preferred embodiments, thermally sprayed coatings are polished after being deposited. These steps provide a degree of surface roughness, which enhances wear-resistance, and decreases friction characteristics.

### EXAMPLES

The examples that follow are merely illustrative, and should not be construed to be any sort of limitation on the scope of the claimed invention.

### Preparation of binary oxide

### Example 1: Solid state method of preparing of NiO-B₂O₃

2.772 grams of NiO powder and 2.585 grams of B₂O₃ powder were milled together using a rack mill for about 3-6 hours. This powder was then extracted and heat treated at about 400 degrees Celsius for about 1 hour followed by heat treatment at 900C for about 1hour.

### Example 2: Alternate solid state method of preparing NiO-B₂O₃

2.772 grams B₂O₃ or 4.924 grams H₃BO₃ was dissolved in water and then mixed along with 4.28 grams of NiO or 5.313 grams nickel hydroxide Ni(OH)₂ powder. After milling for about 3-6 hours, the water was evaporated and the extracted powder was subjected to heat treatment at about 400 degrees Celsius for about 1h and then about 900 degrees Celsius for about 1 hour.

### Example 3: Formation of a coating composition (Sample 1)

8.986 grams of NiCr powder and 60.656 grams of Cr₃C₂ powder were milled in a high-energy mill using a powder-to-media ratio of about 1:15 for about 10 hours. This mixture was further mixed with 5.357 grams of NiO-B₂O₃ powder, synthesized using the solid-state method described in example 1. This mixing was carried out in a rack mill for about 1 hour. The powder had particles of particle size less than about 10 microns with about 90 percent particles of particle size about 6 microns.

### Example 4: Formation of a coating composition (Sample 2)

8.986 grams of NiCr powder, 60.656 grams of Cr₃C₂ powder and 5.357 grams of NiO-B₂O₃ powder (prepared in-house by method described in example 1) were loaded into a polypropylene bottle containing milling media and isopropanol. Milling media to powder ratio was kept about 1:15. Isopropanol was added such a way that the solid loading in the resultant slurry was in a range of about 60 wt% to 80wt%. Milling was carried out for about 10-12 hours and a powder was recovered by solvent evaporation. The powder had particles of particle size less than about 10 microns with about 90 percent particles of particle size about 6 microns.

### Example 5: Formation of test samples

Two powders prepared in example 3 (Sample 1) and example 4 (Sample 2) were pressed in a uniaxial press to form pellets of 25 millimeters in diameter. Sample 1 and Sample 2 were sintered in about 4% hydrogen balance argon atmosphere for about 1 hour.

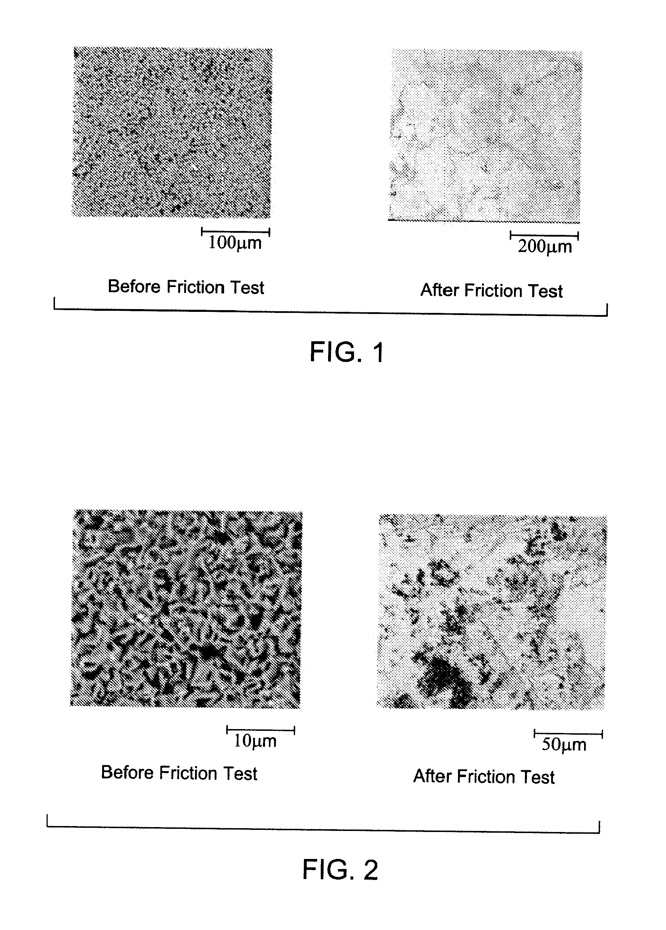

Each sample was subjected to a "pin on disk" friction measurement test. Measurements were taken using a 6 mm diameter tungsten carbide ball under contact pressure of about 1.18 GPa, temperature of about 800 degrees Celsius and speed of about 5 cm/sec. A transducer measured the wear rate and the coefficient of friction. Substantially no wear was observed during 1-hour friction test and 150 meters of sliding. Furthermore, friction coefficients of sample 1 and sample 2 were less than about 0.25, which is comparatively less than the friction coefficient (-0.3) for wear coatings having boron nitride as lubricant phase. Furthermore, FIG. 1 and FIG 2 illustrate microstructures of Sample 1 and Sample 2 before and after the friction measurements. Microstructures of Sample 1 and Sample 2 after the friction measurements show formation of a smooth surface having low friction and low wear rate.

For completeness, various aspects of the invention are now set out in the following numbered clauses:
1. A coating composition, comprising:
   a hard ceramic phase,
   a metallic binder phase; and
   a lubricant phase comprising a multi-component oxide.
2. The coating composition of clause 1, wherein the metallic binder phase is present at a level in the range from about 1 % by volume to about 50% by volume of the total volume of the composition.
3. The coating composition of clause 1, wherein the hard particle phase is present at a level in the range from about 20% by volume to about 90% by volume of the total volume of the composition.
4. The coating composition of clause 1, wherein the lubricant phase is present at a level in the range from about 1% by volume to about 20% by volume of the total volume of the composition.
5. The coating composition of clause 1, wherein the metallic binder phase comprises at least one metal selected from the group consisting of nickel, cobalt, iron, copper, silver and combinations thereof.
6. The coating composition of clause 1, wherein the metallic binder phase further comprises at least one metal selected from the group consisting of tantalum, titanium, chromium, niobium, zirconium, molybdenum, silicon, boron, and vanadium.
7. The coating composition of clause 1, wherein the metallic binder phase comprises nickel and chromium.
8. The coating composition of clause 7, wherein the metallic binder phase comprises at least about 50% by weight nickel, based on the total weight of the metallic phase.
9. The coating composition of clause 1, wherein the hard ceramic phase comprises a carbide, a boride, or an oxide of at least one element selected from the group consisting of tungsten, aluminum, chromium, tantalum, modyblednum, vanadium, zirconium, niobium or a combination thereof.
10. The coating composition of clause 9, wherein the hard ceramic phase comprises chromium carbide.
11. The coating composition of clause 9, wherein the boride is selected from the group consisting of titanium diboride, zirconium diboride, tantalum boride, tungsten boride, and a combination thereof.
12. The coating composition of clause 1, wherein the hard ceramic phase comprises particles having a particle size in the range from about 0.1 micron to about 100 microns.
13. The coating composition of clause 1, wherein the metallic binder phase comprises particles having a particle size in the range from about 0.1 micron to about 5 microns.
14. The coating coating composition of clause 1, wherein the multi-component oxide comprises at least one oxide having ionic potential greater than about 4 Å⁻¹.
15. The coating composition of clause 14, wherein the multi-component oxide comprises at least one oxide having ionic potential greater than about 5 Å⁻¹.
16. The coating composition of clause 1, wherein the multi-component oxide is a binary oxide, a ternary oxide or a tetranary oxide.
17. The coating composition of clause 16, wherein the multi-component oxide comprises at least a metal oxide selected from the group consiting of nickel oxide, alumina, titanium oxide, tantalum oxide, zinc oxide, molybdenum oxide and magnesium oxide.
18. The coating composition of clause 1, wherein the multi-component oxide is a binary oxide.
19. The coating composition of clause 18, wherein the binary oxide is selected from the group consisting of NiO-B₂O₃, NiO-TiO₂, NiO-Ta₂O₅ and MgO-SiO₂.
20. The coating composition of clause 18, wherein the binary oxide comprises constituent oxides present in a ratio (by weight) varying from about 1:1 to about 1:10.
21. The coating composition of clause 20, wherein the binary oxide comprises constituent oxides present in a ratio (by weight) varying from about 1:1 to about 1:5.
22. The coating composition of clause 1, wherein the lubricant phase comprises particles having a particle size in the range from about 0.05 microns to about 20 microns.
23. The coating composition of clause 22, wherein the lubricant phase comprises particles having a particle size in the range from about 0.1 microns to about 10 microns.
24. An article comprising:
   a metallic substrate; and
   a wear-resistant and low-friction coating disposed on the substrate, wherein the coating composition comprises:
      a hard ceramic phase,
      a metallic binder phase; and
      a lubricant phase comprising a multi-component oxide.
25. The article of clause 24, wherein the metallic substrate comprises a component of turbine engine.
26. The article of clause 24, wherein the metallic substrate comprises a superalloy based on nickel, cobalt, iron,aluminum, or titanium.
27. The article of clause 24, wherein the multi-component oxide is a binary oxide.
28. The article of clause 27, wherein the binary oxide is selected from the group consisting of NiO-B₂O₃, NiO-TiO₂, NiO-Ta₂O₅ and MgO-SiO₂.
29. The article of clause 27, wherein the binary oxide comprises constituent oxides present in a ratio (by weight) varying from about 1:1 to about 10:1.
30. The article of clause 29, wherein the binary oxide comprises constituent oxides present in a ratio (by weight) varying from about 1:1 to about 1:5.
31. A method of making a composition for a wear-resistant and low-friction coating, comprising the step of:
   milling a hard ceramic phase and a metallic binder phase to make a mixture; and
   dispersing a lubricant phase in the mixture, wherein the lubricant phase comprises a multi-component oxide.
32. The method of clause 31, wherein milling is carried out in a high energy mill.
33. The method of clause 31, wherein dispersing comprises adding and milling the lubricant phase with the mixture.

## Claims

1. A coating composition, comprising:
a hard ceramic phase,
a metallic binder phase; and
a lubricant phase comprising a multi-component oxide.

2. The coating composition of claim 1, wherein the metallic binder phase is present at a level in the range from about 1 % by volume to about 50% by volume of the total volume of the composition.

3. The coating composition of claim 1 or claim 2, wherein the hard ceramic phase is present at a level in the range from about 20% by volume to about 90% by volume of the total volume of the composition.

4. The coating composition of any preceding claim, wherein the lubricant phase is present at a level in the range from about 1% by volume to about 20% by volume of the total volume of the composition.

5. The coating composition of any preceding claim, wherein the metallic binder phase comprises at least one metal selected from the group consisting of nickel, cobalt, iron, copper, silver and combinations thereof.

6. The coating composition of any preceding claim, wherein the metallic binder phase further comprises at least one metal selected from the group consisting of tantalum, titanium, chromium, niobium, zirconium, molybdenum, silicon, boron, and vanadium.

7. The coating composition of any preceding claim, wherein the metallic binder phase comprises nickel and chromium.

8. The coating composition of any preceding claim, wherein the hard ceramic phase comprises a carbide, a boride, or an oxide of at least one element selected from the group consisting of tungsten, aluminum, chromium, tantalum, modyblednum, vanadium, zirconium, niobium or a combination thereof.

9. The coating coating composition of any preceding claim, wherein the multi-component oxide comprises at least one oxide having ionic potential greater than about 4 Å⁻¹.

10. The coating composition of any preceding claim, wherein the multi-component oxide is a binary oxide, a ternary oxide or a quarternary oxide.

11. The coating composition of claim 10, wherein the binary oxide is selected from the group consisting of NiO-B₂O₃, NiO-TiO₂, NiO-Ta₂O₅ and MgO-SiO₂.

12. An article comprising:
a metallic substrate; and
a wear-resistant and low-friction coating according to any preceding claim disposed on the substrate.

13. The article of claim 12, wherein the metallic substrate comprises a component of turbine engine.

14. A method of making a composition for a wear-resistant and low-friction coating, comprising the step of:
milling a hard ceramic phase and a metallic binder phase to make a mixture; and
dispersing a lubricant phase in the mixture, wherein the lubricant phase comprises a multi-component oxide.
